# FASCICULE DE BREVET EUROPEEN

(11) **EP 1 436 137 B1**
(45) Date de publication et mention de la délivrance du brevet: **09.03.2011**
(21) Numéro de dépôt: 02802663.1
(22) Date de dépôt: 11.10.2002
(51) Int. Cl.: B29C 47/06, B32B 27/08, B32B 7/06, B29C 47/00

(54) **PROCEDE DE FABRICATION DE FILMS PAR COEXTRUSION SOUFFLAGE DE GAINE**
VERFAHREN ZUR HERSTELLUNG VON FOLIEN DURCH COEXTRUSIONS-BLASFORMEN
METHOD OF PRODUCING FILMS BY MEANS OF COEXTRUSION BLOW-MOULDING

(30) Priorité: 19.10.2001 FR 0113520
(43) Date de publication de la demande: 14.07.2004
(73) Titulaire: ARKEMA FRANCE, 92700 Colombes (FR)
(72) Inventeur: SILAGY, David, F-27000 Evreux (FR); REIGNIER, Gérard, F-27470 Fontaine L'Abbe (FR); BUSSI, Philippe, F-7600 Rouen (FR)
(86) Numéro de dépôt international: PCT/FR2002/003487
(87) Numéro de publication internationale: WO 2003/039840

(56) Documents cités:
- EP-A- 0 808 713
- DE-A- 4 337 491
- US-A- 4 585 701
- US-A- 4 871 506
- PATENT ABSTRACTS OF JAPAN vol. 007, no. 079 (M-204), 31 mars 1983 (1983-03-31) -& JP 58 005226 A (TOPPAN INSATSU KK), 12 janvier 1983 (1983-01-12)
- PATENT ABSTRACTS OF JAPAN vol. 013, no. 049 (C-565), 3 février 1989 (1989-02-03) & JP 63 243143 A (MITSUBISHI PETROCHEM CO LTD), 11 octobre 1988 (1988-10-11)
- PATENT ABSTRACTS OF JAPAN vol. 015, no. 260 (M-1131), 2 juillet 1991 (1991-07-02) & JP 03 086516 A (MITSUBISHI PETROCHEM CO LTD;OTHERS: 01), 11 avril 1991 (1991-04-11)

## Description

### [Domaine de l'invention]

La présente invention concerne un procédé de fabrication de films utilisant la technique de coextrusion soufflage de gaine. Les films de polymères thermoplastiques de faible épaisseur sont habituellement obtenus par le procédé d'extrusion et soufflage consistant à extruder, généralement de bas en haut, un polymère thermoplastique à travers une filière annulaire, l'extrudat étant simultanément tiré longitudinalement par un dispositif de tirage, habituellement à rouleaux, et gonflé par un volume d'air constant emprisonné entre la filière, le système de tirage et la paroi de la gaine. La gaine gonflée, encore appelée bulle, est refroidie généralement par un anneau de soufflage d'air à la sortie de la filière. La bulle mise à plat est enroulée, soit sous forme de gaine, soit après découpe en deux films séparés.

### [L'art antérieur et le problème technique]

Le brevet EP 278804 explique que dans le cas de polymères fluides semi-cristallins ce procédé d'extrusion et soufflage de gaines est pour le moins délicat, sinon impossible à utiliser. Dans ce cas les forces mises en jeu, telles que force de tirage, pression interne de la bulle, gravité et autres s'appliquent à un extrudat dont la résistance mécanique est très faible. Il en résulte des déformations importantes de la bulle conduisant à la formation de plis sur le film après la mise à plat de la bulle, ainsi qu'à l'absence totale de la maîtrise de la répartition d'épaisseur du film.

La technique décrite dans ce brevet EP 278804 consiste par le procédé de coextrusion et soufflage à coextruder le polymère fluide semi-cristallin avec une résine thermoplastique qui est incompatible de façon telle qu'après refroidissement et mise à plat de la bulle on récupère séparément les deux films extrudés par des moyens classiques, tel que par enroulement distinct des films séparés. A titre d'exemple de polymère semi-cristallin on a cité les polyamides et leurs copolymères, les polyesters tels que le polybutylene téréphtalate (PBT) ou le polyéthylène téréphtalate (PET) et leurs copolymères, le polypropylène, le polyfluorure de vinylldène et ses copolymères, les copolymères éthylène ester d'hydroxyalkyle (EVOH). Parmi les résines thermoplastiques incompatibles susceptibles d'être utilisées on a cité les polyéthylènes haute pression, le polystyrène choc, le polychlorure de vinyle plastifié.

L'exemple unique montre une bulle constituée d'un film de 25 µm de PVDF coextrudé avec un film de 60 µm de polyéthylène. Dans la description il est précisé que l'épaisseur du film de résine thermoplastique incompatible (le polyéthylène) doit être de préférence 1 à 5 fois l'épaisseur du film de polymère semi-cristallin. Il est écrit aussi dans la description qu'il n'est pas exclu de coextruder plus de deux films, mais on ne sait pas de quels films il s'agit. De plus dans cette technique le film de polyéthylène ne peut pas être utilisé comme film en lui même et il doit être recyclé parce qu'il ne contient pas les additifs nécessaires tels que les anti U.V. et les antioxydants. Si on y ajoute ces additifs on complique le procédé qui a pour but essentiel de produire un film du polymère semi-cristallin. Il est donc souhaitable de réduire cette épaisseur du film de polyéthylène pour réduire la quantité qu'il faut recycler.

On a maintenant trouvé qu'on pouvait produire par le procédé d'extrusion soufflage de gaine un film comprenant une couche de polymère fluoré et une couche d'un autre polymère (A), ces deux couches étant adjacentes ainsi qu'une troisième couche d'un polymère incompatible disposée soit du coté du polymère fluoré soit du coté du polymère (A). Le polymère (A) peut être quelconque, par exemple amorphe, c'est à dire qu'il n'est pas forcement semi-cristallin et l'épaisseur de la couche de polymère incompatible n'est pas nécessairement d'une à cinq fois l'épaisseur de l'ensemble formé par la couche du polymère fluoré et la couche adjacente du polymère (A). On sépare ensuite la couche de polymère incompatible.

Le film peut comprendre en outre au moins une couche de polymère fluoré comprenant des charges ou au moins une couche de polymère (A) ainsi qu'une couche de polymère incompatible. On sépare ensuite la couche de polymères incompatible.

### [Brève description de l'invention]

La présente invention concerne un procédé de fabrication d'un film comprenant au moins une couche d'un polymère choisi parmi les polymères fluorés thermoplastiques et les polymères (A) tel que défini dans la revendication 1.

Des modes de réalisation particuliers sont définis dans les revendications dépendantes 2 à 15.

### [Description détaillée de l'invention]

**S'agissant du polymère fluoré** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VF2); le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro(1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R3OCF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene.

Le polymère fluoré peut être un homopolymère ou un copolymère, il peut aussi comprendre des monomères non fluorés tels que l'éthylène.
- Avantageusement, le polymère fluoré est choisi parmi :
   - Les homo- et copolymères du fluorure de vinylidène (VF2) contenant de préférence au moins 50% en poids de VF2, le copolymère étant choisi parmi le chlorotrifluoroéthylène (CTFE), l'hexafluoropropylène (HFP), le trifluoroéthylène (VF3) et le tétrafluoroéthylène (TFE),
   - Les homo- et copolymères du trifluoroéthylène (VF3),
   - Les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

De préférence, le polymère fluoré est du poly(fluorure de vinylidène) (PVDF) homopolymère. Avantageusement, le PVDF a une viscosité allant de 100 Pa.s à 2000 Pa.s, la viscosité étant mesurése à 230°C, à un gradient de cisaillement de 100 s⁻¹à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

Ainsi, les PVDF commercialisés sous la marque KYNAR^{®} 710 ou 720 sont parfaitement adaptés pour cette formulation.

**S'agissant du polymère (A)** il présente une affinité avec le polymère fluoré pour pouvoir éventuellement adhérer sur une couche de polymère fluoré. A titre d'exemple de polymère (A) on peut citer les polyurethanes, les polymères ayant des blocs à motifs (meth)acrylate, les polymères acryliques. Par exemple (A) est un polymère amorphe.

Avantageusement (A) est un polymère acrylique. Ce polymère est constitué essentiellement de motifs (meth)acrylate d'alkyle et peut comprendre aussi des fonctions acide, chlorure d'acide, alcool, anhydride. A titre d'exemple on peut citer les homopolymères d'un (méth)acrylate d'alkyle. Des (méth)acrylates d'alkyle sont décrits dans KIRK-OTHMER, Encyclopedia of chemical technology, 4 ème édition dans le Vol 1 pages 292-293 et dans le Vol 16 pages 475-478. On peut encore citer des copolymères d'au moins deux de ces (méth)acrylates et des copolymères d'au moins un (méth)acrylate avec au moins un monomère choisi parmi l'acrylonitrile, le butadiène, le styrène, l'isoprène pourvu que la proportion de (meth)acrylate soit d'au moins 50% en moles. (A) est avantageusement le PMMA. Le MVI (melt volume index ou indice de fluidité en volume à l'état fondu) de (A) peut être compris entre 2 et 15 cm3/10 min mesuré à 230°C sous une charge de 3,8 kg.

On ne sortirait pas du cadre de l'invention si (A) était un mélange d'au moins deux polymères acryliques.

**S'agissant de la couche de polymère (A)** elle contient en plus de (A) avantageusement un polymère fluoré qui peut être le même que celui de la couche de polymère fluoré, éventuellement un modifiant choc acrylique, éventuellement des charges telles que par exemple de l'oxyde de titane. La couche de polymère (A) peut aussi contenir des additifs tels que des anti U.V. et des antioxydants.

Les modifiants choc acryliques sont par exemple des copolymères statistiques ou sequencés d'au moins un monomère choisi parmi le styrène, le butadiène, l'isoprène et d'au moins un monomère choisi parmi l'acrylonitrile et les (meth)acrylate d'alkyle, ils peuvent être de type coeur-écorce (core-shell). Ces modifiants choc acryliques peuvent aussi être présents dans (A) parce qu'ils ont été introduits au cours de la polymérisation de (A) ou préparés simultanément au cours de la polymérisation de (A). Le copolymère coeur - écorce se présente sous la forme de fines particules ayant un coeur en élastomère et au moins une écorce thermoplastique, la taille des particules est en général inférieure au µm et avantageusement comprise entre 80 et 500 nm. A titre d'exemple de coeur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (meth)acrylate d'alkyle. Une autre famille de coeur est constituée par les homopolymères d'un (meth)acrylate d'alkyle et les copolymères d'un (meth)acrylate d'alkyle avec au plus 30% en moles d'un monomère vinylique. Le (meth)acrylate d'alkyle est avantageusement l'acrylate de butyle. Le monomère vinylique peut être le styrène, un alkylstyrène, l'acrylonitrile, le butadiène ou l'isoprène. Le coeur peut être réticulé en tout ou partie. Il suffit d'ajouter des monomères au moins difonctionnels au cours de la préparation du coeur, ces monomères peuvent être choisis parmi les esters poly(meth)acryliques de polyols tels que le di(meth)acrylate de butylène et le trimethylol propane trimethacrylate. D'autres monomères difonctionnels sont par exemple le divinylbenzène, le trivinylbenzène, l'acrylate de vinyle et le methacrylate de vinyle. On peut aussi réticuler le coeur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle. L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle. A titre d'exemple on peut citer des copolymères coeur - écorce ayant une écorce en polystyrène et des copolymères coeur - écorce ayant une écorce en PMMA. Il existe aussi des copolymères coeur - écorce ayant deux écorces , l'une en polystyrène et l'autre à l'exterieur en PMMA. Des exemples de copolymère coeur-écorce ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704. Avantageusement le coeur représente, en poids, 70 à 90% de l'ensemble coeur-écorce et l'écorce 30 à 10%. A titre d'exemple de copolymère coeur-écorce on peut citer celui constitué (i) de 75 à 80 parties d'un coeur comprenant en moles au moins 93% de butadiène, 5% de styrène et 0,5 à 1% de divinylbenzène et (ii) de 25 à 20 parties de deux écorces essentiellement de même poids l'une intérieure en polystyrène et l'autre extérieure en POMMA.

**S'agissant des formes avantageuses de la couche de polymère (A)** cette couche comprend, en poids le total étant 100%,
40 à 90 % de polymère (A),
0 à 35 % d'un polymère fluoré,

Le complément à 100 % d'un modifiant choc acrylique.

De préférence la proportion de polymère (A) est comprise entre 40 et 55 %. De préférence la proportion de polymère fluoré est comprise entre 20 et 30 %.

L'épaisseur de la couche de polymère (A) peut être comprise entre 3 et 60µm. Avantageusement l'épaisseur de la couche de polymère (A) est comprise entre 8 et 40 µm et de préférence entre 10 et 35 µm.

Le mélange constituant la couche de polymère (A) peut être préparé à l'aide de tout dispositif de mélange des polymères thermoplastiques et récupéré sous forme de granulés qui sont ensuite introduits dans l'une des extrudeuses qui alimente la filière du système d'extrusion soufflage ou bien préparé directement par mélange de ses constituants dans cette extrudeuse.

**S'agissant de la couche de polymère fluoré** elle contient en plus du polymère fluoré avantageusement un polymère (A) qui peut être le même que celui de la couche de polymère (A), éventuellement des charges telles que par exemple de l'oxyde de titane ou d'autres pigments. La couche de polymère fluoré peut aussi contenir des additifs tels que des anti U.V. et des antioxydants.

Selon une autre forme de l'invention (l'option b) dans la brève description de l'invention) dans laquelle on extrude une ou plusieurs couches de polymère fluoré contenant des charges et éventuellement au moins une autre couche de polymère fluoré mais dans laquelle on n'extrude pas de couche de polymère (A) la proportion de charges peut être jusqu'à 40% en poids pour 60% de polymère fluoré. Avantageusement cette proportion est comprise entre 5 et 30%.

**S'agissant des formes avantageuses de la couche de polymère fluoré** cette couche comprend, en poids le total étant 100%,
50 à 100 % de polymère fluoré,
0 à 40 % d'un polymère (A),

Le complément à 100 % de charges.

De préférence la proportion de polymère fluoré est comprise entre 50 et 85 %. De préférence la proportion de polymère (A) est comprise entre 20 et 30 %.

L'épaisseur de la couche de polymère fluoré peut être comprise entre 5 et 60µm. Avantageusement l'épaisseur de la couche de polymère fluoré est comprise entre 8 et 25 µm et de préférence entre 10 et 20 µm.

Le mélange constituant la couche de polymère fluoré peut être preparé à l'aide de tout dispositif de mélange des polymères thermoplastiques et récupéré sous forme de granulés qui sont ensuite introduits dans l'une des extrudeuses qui alimente la filière du système d'extrusion soufflage ou bien préparé directement par mélange de ses constituants dans cette extrudeuse.

On ne sortirait pas du cadre de l'invention si le film comprenait deux ou plusieurs couches de polymère fluoré et deux ou plusieurs couches de polymère (A). De préférence les couches supplementaires de polymère fluoré sont disposées du coté de la couche existante de polymère fluoré et les couches supplementaires de polymère (A) sont disposées du coté de la couche existante de polymère (A).

**Le procédé de l'invention** consiste par le procédé de coextrusion et soufflage à coextruder le polymère fluoré et le polymère (A) avec un polymère thermoplastique (B) qui est incompatible de façon telle qu'après refroidissement et mise à plat de la bulle on récupère séparément le film comprenant la couche de polymère fluoré et la couche de polymère (A) et le film de polymère (B) tel que par enroulement distinct des films séparés. Le polymère thermoplastique incompatible (B) ne doit avoir aucune affinité, et en particulier aucune affinité d'adhérence, avec le polymère fluoré et avec le polymère (A).

Ce polymère (B) doit être tel qu'une fois coextrudé avec le polymère fluoré et le polymère (A) son film puisse être séparé sans effort du polymère fluoré et du polymère (A). Ce polymère (B) servant de support pendant l'extrusion et soufflage doit bien entendu posséder une tenue d'extrudat, c'est-à-dire une résistance à chaud de la matière fondue, suffisante pour supporter les contraintes de l'extrusion et soufflage ainsi que le polymère fluoré et/ou le polymère (A). Pour cela il est recommandé que ce polymère possède une viscosité à l'état fondu relativement élevée de l'ordre de 10³ à 10⁴ Pa.s sous une vitesse de cisaillement de 100 s⁻¹ ainsi qu'une bonne résistance au cisaillement et à la traction. Parmi les polymères susceptibles d'être utilisés on peut citer à titre d'exemples les polyéthylènes, le polystyrène choc, ie polychlorure de vinyle plastifié. Parmi les polyéthylènes on préfère le polyéthylène basse densité (LDPE).

Les épaisseurs relatives des matières extrudées au niveau de l'extrudat sont ajustées d'une part en fonction de l'épaisseur finale souhaitée pour le polymère fluoré et le polymère (A) d'autre part en fonction de la tenue de la bulle pour (B). D'une manière caractéristique l'épaisseur de la couche (ou de la somme des épaisseurs des deux couches) du film de polymère (B) non compatible est de 0,3 à 2 fois, et mieux 0,5 à 1 fois la somme des épaisseurs de la (ou des) couche(s) éventuelle(s) de polymère fluoré et de la (ou des) couche(s) éventuelle(s) de polymère (A). En outre si on ne souhaite pas conserver le film support de polymère (B) thermoplastique, il est possible de le recycler dans le système pour former un nouveau film support.

### [exemples]

Nous avons réalisés les films décrits dans le tableau 1 selon l'invention sur une machine Kiefel équipée de 3 extrudeuses dont les caractéristiques sont données dans le tableau 2. Ces films ont été extrudés à travers une filière annulaire de technologie mandrin spiralé. On insuffle dans le système une pression d'air de façon à former une gaine de diamètre variable. L'intensité de cette pression d'air est caractérisée par le taux de gonflage dont la définition est le diamètre de la gaine divisé par le diamètre de la filière. Le tableau 1 précise la valeur de ce taux pour chaque exemple. Le polyéthylène est extrudé à 200°C et les polymères constituant les films sont extrudés à une température variant de 220°C à 240°C. Ces films sont formés des constituants de base suivants :
- **Polymère TC1** constitué de 80% en masse de Kynar® 720 (PVDF homopolymère de la société ATOFINA et de MVI (Melt Volume Index ou indice de fluidité en volume à l'état fondu) 10 cm³/10 min (230°C , 5kg)) et de 20% en masse d'OROGLAS® V 825 T (PMMA de la société ATOGLAS) de MVI 2.5 cm³/10 min (230°C , 3,8kg)).
- **Polymère TC3** constitué de 50% en masse de Kynar® 720 (PVDF homopolymère de la société ATOFINA et de MVI (Melt Volume Index ou indice de fluidité en volume à l'état fondu) 10 cm³/10. min (230°C , 5kg)), de 20% en masse d'OROGLAS® BS8 (PMMA de la société ATOGLAS) de MVI 4.5 cm³/10 min (230°C, 3.8kg) sous forme de perle contenant un comonomére acrylate de méthyle à hauteur de 12% et de 30% de dioxyde de titane.
- **Polymère TC4** constitué de 60% de Kynar® 720 (PVDF homopolymère de la société ATOFINA et de MVI (Melt Volume Index ou indice de fluidité en volume à l'état fondu) 10 cm³/10 min (230°C , 5kg)), de 15% en masse d'OROGLAS® V 825 T (PMMA de la société ATOGLAS) de MVI 2.5 cm³/10 min (230°C, 3,8kg)), de 10% en masse d'OROGLAS® BS8 (PMMA de la société ATOGLAS) de MVI 4.5 cm³/10 min (230°C, 3.8kg) sous forme de perle contenant un comonomére acrylate de méthyle à hauteur de 12% et de 15% de dioxyde de titane.
- **Polymère TC5** constitué de 53% de Kynar® 720 (PVDF homopolymère de la société ATOFINA et de MVI (Melt Volume Index ou indice de fluidité en volume à l'état fondu) 10 cm³/10 min (230°C , 5kg)), de 9% en masse d'OROGLAS® V 825 T (PMMA de la société ATOGLAS) de MFI (Melt Flow Index en masse à l'état fondu) 2.5 cm³/10 min (230°C, 3,8kg)), de 15,2% en masse d'OROGLAS® BS8 (PMMA de la société ATOGLAS) de MVI 4.5 cm³/10 min (230°C, 3.8kg) sous forme de perle contenant un comonomère acrylate de méthyle à hauteur de 12% et dé 22,8% de dioxyde de titane.
- **Polymère L2** constitué de 25% de Kynar® 720 (PVDF homopolymère de la société ATOFINA et de MVI (Melt Volume Index ou indice de fluidité en volume à l'état fondu) 10 cm³/10 min (230°C , 5kg)), de 47% en masse d'OROGLAS® V 825 T (PMMA de la société ATOGLAS) de MVI 2.5 cm³/10 min (230°C, 3,8kg)), de 28% d'un Durastrength® D320 d'ATOFINA dit core shell acrylique de taille environ 80nm et d'un absorbeur ultraviolet présentant une masse moléculaire élevée de la famille des benzotriazoles.
- Polymère **Lacqtene** 1003FE23, polyéthylène basse densité de la société ATOFINA de MVI (Melt Volume Index ou indice de fluidité en masse à l'état fondu) de 0,5 cm³/10 min (190°C, 2.16 kg) et de densité 0,923.

**Tableau 1**

| ex | Polymère dans l'extrudeuse 1 (épaisseur) | Polymère dans l'extrudeuse 2 (épaisseur) | Polymère dans l'extrudeuse 3 (épaisseur) | Entrefer filière Diamètre filière (mm) | Taux de gonflage | Qualité du film |
|---|---|---|---|---|---|---|
| | | | Lacqtene | | | |
| ex 1 | TC1 (20 µm) | L2 (30 µm) | 1003FE23 (15 | 1.2 | 1.98 | Bulle |
| | | | µm) | 225 | | stable |
| | | | Lacqtene | | | |
| ex2 | TC3 (10 µm) | L2 (20 µm) | 1003FE23 (25 | 0.8 | 1.7 | Bulle |
| | | | µm) | 225 | | stable |
| | ex 3 TC3 (10µm) | L2 (10 µm) | L2 (10µm) | 0.8 | 17 | Bulle |
| (comp) | | | | 225 | | Instable |
| | | | Lacqtene | | | |
| ex 4 | TC4(15 µm) | L2 (15 µm) | 1003FE23 (25 | 0.8 | 1.7 | Bulle |
| | | | µm) | 225 | | stable |
| ex 5 | TC4 (15 µm) | L2 (10 µm) | L2 (5 µm) | 0.8 | 1.7 | Bulle |
| (comp) | | | | 225 | | Instable |
| ex 6 | Lacqtene | Lacqtene | | | | |
| (comp) | 1003FE23 | 1003FE23 | TC5 (25 µm) | 1.2 | 2.5 | Bulle |
| | (25 µm) | (25 µm) | | 150 | | stable |
| ex 7 | TC5 (8 µm) | TC5 (8µm) | TC5 (9 µm) | 1.2 | 2.5 | Instable |
| (comp) | | | | 150 | | |
| ex 8 | Lacqtene | | Lacqtene | | | |
| (comp) | 1003FE23 | 1003FE23 | TC5 (50 µm) | 1.2 2. | 5 | Bulle |
| | (25 µm) | (25 µm) | | 150 | | stable |
| ex 9 | TC5 (17 µm) | TC5 (17 µm) | TC5 (16 µm | 1.2 | 2.5 | Instable |
| (comp) | | | | 150 | | |

**Tab. 2 : Description des extrudeuses**

| | Diamètre de vis en mm | Longueur/ Diamètre |
|---|---|---|
| Extrudeuse 1 | 60 | 29 |
| Extrudeuse 2 | 50 | 25 |
| Extrudeuse 3 | 50 | 29 |

## Revendications

1. Procédé de fabrication d'un film comprenant au moins une couche d'un polymère choisi parmi les polymères fluorés thermoplastiques et les polymères (A) dans lequel par extrusion soufflage:
• on coextrude:
a) au moins une couche d'un polymère fluoré thermoplastique et au moins une couche d'un polymère (A),
les couches extrudées en a) adhérant entre elles,
d) une couche d'un autre polymère thermoplastique (B) de sorte qu'il forme une couche adjacente à l'ensemble des couches extrudées en a),
• le dit autre polymère thermoplastique (B) étant incompatible avec le polymère fluoré et le polymère (A) et possède une tenue d'extrudat suffisante pour supporter la couche de polymère fluoré et la couche de polymère (A),
• après refroidissement du coextrudat obtenue par extrusion soufflage, par séparation de la couche de (B) on récupère au moins le film comprenant au moins une couche d'un polymère fluoré thermoplastique et le polymère (A),
dans lequel le polymère (A) est un polymère acrylique et l'épaisseur de la couche du film de polymère (B) non compatible est de 0,3 à 2 fois la somme des épaisseurs de la (ou des) couche(s) de polymère fluoré et de la (ou des) couche(s) de polymère (A).

2. Procédé selon la revendication 1, dans lequel, on coextrude, en outre, au moins une couche b) d'un polymère fluoré thermoplastique contenant des charges.

3. Procédé selon la revendication 1 ou 2 dans lequel le polymère fluoré est le PVDF homopolymère.

4. Procédé selon l'une quelconque des revendications 1 à 3 dans lequel la couche de polymère (A) comprend un polymère fluoré, éventuellement un modifiant choc acrylique, éventuellement des charges.

5. Procédé selon la revendication 4 dans lequel la couche de polymère (A) comprend, en poids le total étant 100%,
40 à 90 % de polymère (A),
0 à 35 % d'un polymère fluoré,
le complément à 100 % d'un modifiant choc acrylique.

6. Procédé selon l'une quelconque des revendications 1 à 3 dans lequel la couche de polymère fluoré comprend un polymère (A) et éventuellement des charges.

7. Procédé selon la revendication 6 dans lequel la couche de polymère fluoré comprend, en poids le total étant 100%,
50 à 100% de polymère fluoré,
0 à 40 % d'un polymère (A),
le complément à 100 % de charges.

8. Procédé selon l'une quelconque des revendications précédentes dans lequel l'épaisseur de la couche de polymère (A) est comprise entre 3 et 60µm.

9. Procédé selon la revendication 8 dans lequel l'épaisseur de la couche de polymère (A) est comprise entre 8 et 40µm.

10. Procédé selon la revendication 9 dans lequel l'épaisseur de la couche de polymère (A) est comprise entre 10 et 35µm.

11. Procédé selon l'une quelconque des revendications 1 à 7 dans lequel l'épaisseur de la couche de polymère fluoré est comprise entre 5 et 60µm.

12. Procédé selon la revendication 11 dans lequel l'épaisseur de la couche de polymère fluoré est comprise entre 8 et 25µm.

13. Procédé selon la revendication 12 dans lequel l'épaisseur de la couche de polymère fluoré est comprise entre 10 et 2µm.

14. Procédé selon l'une quelconque des revendications précédentes dans lequel le polymère thermoplastique (B) est le polyéthylène.

15. Procédé selon l'une quelconque des revendications précédentes dans lequel l'épaisseur de la couche (ou de la somme des épaisseurs des deux couches) du film de polymère (B) non compatible est de 0,5 à 1 fois la somme des épaisseurs de la (ou des) couche(s) éventuelle(s) de polymère fluoré et de la (ou des) couche(s) éventuelle(s) de polymère (A).

## Claims

1. Process for manufacturing a film comprising at least one layer of a polymer chosen from thermoplastic fluoropolymers and polymers (A), in which blow extrusion process:
• the following are coextruded:
a) at least one layer of a thermoplastic fluoropolymer and at least onelayer of a polymer (A),
the layers extruded in a) adhering to one another,
d) a layer of another thermoplastic polymer (B) so that it forms a layer adjacent to the combination of the layers extruded in a),
• the thermoplastic polymer (B) being incompatible with the fluoropolymer and the polymer (A) and possesses an extrudate strength sufficient to support the layers of fluoropolymer and of polymer (A);
• after the coextrudate has been cooled, at least the film comprising at least one layer comprising a thermoplastic fluoropolymer and the polymer (A) is recovered by separation from the layer(s) of (B),
wherein polymer (A) is an acrylic polymer and the thickness of the layer of the film of incompatible polymer (B) is from 0.3 to 2 times the sum of the thicknesses of the optional fluoropolymer layer(s) and of the optional layer(s) of polymer (A).

2. Process according to Claim 1, in which at least one layer b) of a thermoplastic fluoropolymer containing fillers is coextruded with layers a) and d).

3. Process according to Claim1 or claim 2 in which the fluoropolymer is a PVDF homopolymer.

4. Process according to any one of the preceding claims, in which the layer of polymer (A) comprises a fluoropolymer, optionally an acrylic impact modifier and optionally fillers.

5. Process according to Claim 4, in which the layer of polymer (A) comprises, by weight, the total being 100%:
40 to 90% of polymer (A);
0 to 35% of a fluoropolymer;
the balance to 100% of an acrylic impact modifier.

6. Process according to any one of Claims 1 to 3, in which the layer of fluoropolymer comprises a polymer (A) and optionally fillers.

7. Process according to Claim 6, in which the layer of fluoropolymer comprises, by weight, the total being 100%:
50 to 100% of fluoropolymer;
0 to 40% of a polymer (A);
the balance to 100% of fillers.

8. Process according to any one of the preceding claims, in which the thickness of the layer of polymer (A) is between 3 and 60 µm.

9. Process according to Claim 8, in which the thickness of the layer of polymer (A) is between 8 and 40 µm.

10. Process according to Claim 9, in which the thickness of the layer of polymer (A) is between 10 and 35 µm.

11. Process according to any one of Claims 1 to 7, in which the thickness of the fluoropolymer layer is between 5 and 60 µm.

12. Process according to Claim 11, in which the thickness of the fluoropolymer layer is between 8 and 25 µm.

13. Process according to Claim 12, in which the thickness of the fluoropolymer layer is between 10 and 20 µm.

14. Process according to any one of the preceding claims, in which the thermoplastic polymer (B) is polyethylene.

15. Process according to any one of the preceding claims, in which the thickness of the layer (or the sum of the thicknesses of the two layers) of the film of incompatible polymer (B) is from 0.5 to 1 times the sum of the thicknesses of the optional fluoropolymer layer(s) and of the optional layer(s) of polymer (A).

## Patentansprüche

1. Verfahren zur Herstellung einer Folie, die mindestens eine Schicht eines Polymers aufweist, das unter den thermoplastischen fluorierten Polymeren und den Polymeren (A) ausgewählt ist, bei dem durch Extrusionsblasformen:
• coextrudiert werden:
a) zumindest eine Schicht eines thermoplastischen fluorierten Polymers und zumindest eine Schicht eines Polymers (A),
wobei die gemäß a) extrudierten Schichten aneinander haften,
d) eine Schicht eines weiteren thermoplastischen Polymers (B) in einer Weise, dass es eine Schicht bildet, die an die Gesamtheit der gemäß a) extrudierten Schichten angrenzt,
• wobei das weitere thermoplastische Polymer (B) mit dem fluorierten Polymer und dem Polymer (A) inkompatibel ist und eine ausreichende Extrudatfestigkeit aufweist, um die Schicht des fluorierten Polymers und die Schicht des Polymers (A) zu stützen,
• nach dem Abkühlen des durch Extrusionsblasformen gebildeten Coextrudats gewinnt man durch Abtrennen der Schicht (B) zumindest den Film, der zumindest eine Schicht eines thermoplastischen fluorierten Polymers und das Polymer (A) umfasst,
wobei es sich bei dem Polymer (A) um ein Acrylpolymer handelt und die Schichtdicke des Films des inkompatiblen Polymers (B) das 0,3- bis 2-fache der Summe der Dicken der Schicht(en) des fluorierten Polymers und der Schicht(en) des Polymers (A) beträgt.

2. Verfahren nach Anspruch 1, bei dem ferner mindestens eine Schicht b) eines thermoplastischen fluorierten Polymers, das Füllstoffe enthält, coextrudiert wird.

3. Verfahren nach Anspruch 1 oder 2, wobei es sich bei dem fluorierten Polymer um das PVDF-Homopolymer handelt.

4. Verfahren nach einem der Ansprüche 1 bis 3, bei dem die Schicht des Polymers (A) ein fluoriertes Polymer (A), gegebenenfalls einen Acryl-Schlagzähmodifizierer und gegebenenfalls Füllstoffe enthält.

5. Verfahren nach Anspruch 4, bei dem die Schicht des Polymers (A), wobei die auf das Gewicht bezogene Summe 100 % beträgt, enthält:
40 bis 90 % Polymer (A)
0 bis 35 % eines fluorierten Polymers
wobei es sich bei dem für 100 % erforderlichen Rest um einen Acryl-Schlagzähmodifizierer handelt.

6. Verfahren nach einem der Ansprüche 1 bis 3, bei dem die Schicht des fluorierten Polymers ein Polymer (A) und gegebenenfalls Füllstoffe enthält.

7. Verfahren nach Anspruch 6, bei dem die Schicht des fluorierten Polymers, wobei die auf das Gewicht bezogene Summe 100 % beträgt, enthält:
50 bis 100 % fluoriertes Polymer
0 bis 40 % Polymer (A)
wobei es sich bei dem für 100 % erforderlichen Rest um Füllstoffe handelt.

8. Verfahren nach einem der vorhergehenden Ansprüche, wobei die Dicke der Schicht des Polymers (A) im Bereich von 3 bis 60 µm liegt.

9. Verfahren nach Anspruch 8, wobei die Dicke der Schicht des Polymers (A) im Bereich von 8 bis 40 µm liegt.

10. Verfahren nach Anspruch 9, wobei die Dicke der Schicht des Polymers (A) im Bereich von 10 bis 35 µm liegt.

11. Verfahren nach einem der Ansprüche 1 bis 7, wobei die Dicke der Schicht des fluorierten Polymers im Bereich von 5 bis 60 µm liegt.

12. Verfahren nach Anspruch 11, wobei die Dicke der Schicht des fluorierten Polymers im Bereich von 8 bis 25 µm liegt.

13. Verfahren nach Anspruch 12, wobei die Dicke der Schicht des fluorierten Polymers im Bereich von 10 bis 20 µm liegt.

14. Verfahren nach einem der vorhergehenden Ansprüche, wobei es sich bei dem thermoplastischen Polymer (B) um das Polyethylen handelt.

15. Verfahren nach einem der vorhergehenden Ansprüche, bei dem die Dicke der Schicht (oder die Summe der Dicken von zwei Schichten) des Films des inkompatiblen Polymers (B) das 0,5- bis 1-fache der Summe der Dicken der etwaigen Schicht(en) des fluorierten Polymers und der etwaigen Schicht(en) des Polymers (A) beträgt.
